# EUROPEAN PATENT APPLICATION

(11) **EP 3 742 417 A1**
(43) Date of publication of application: **25.11.2020**
(21) Application number: 20184703.5
(22) Date of filing: 15.04.2016
(51) Int. Cl.: G08C 17/02, A63H 30/04, H04M 1/02, H04M 1/04, A63F 13/24, A63H 27/00, H04B 1/3877, H04B 1/3888, A63F 13/235, A63F 13/26, A63F 13/98

(54) **REMOTE CONTROLLER AND MANUFACTURING METHOD FOR REMOTE CONTROLLER**

(62) Divisional of application: 16898271.8
(71) Applicant: SZ DJI Technology Co., Ltd., Shenzhen, Guangdong 518057 (CN)
(72) Inventor: DENG, Yumian, Shenzhen City, Guangdong 518057 (CN); YUAN, Bo, Shenzhen City, Guangdong 518057 (CN); WU, Zhenkai, Shenzhen City, Guangdong 518057 (CN)
(74) Representative: Appelt, Christian W.

(57) **Abstract**

A remote controller includes a remote controller body (11) provided with a control device (111) for a user to input a remote-control command, a holding mechanism (12) configured to hold a mobile terminal (21), and a connecting mechanism (12) connected between the remote controller body (11) and the holding mechanism (12). The holding mechanism (12) is movably connected to the remote controller body (11) via the connecting mechanism (13). The holding mechanism (12) moves with respect to the remote controller body (11) to be either in an extended state for holding the mobile terminal (21) or in a contracted state that is convenient for carrying the remote controller. The present disclosure improves the portability of the remote controller.

## Description

### TECHNICAL FIELD

The present disclosure relates to remote control technology and, more particularly, to a remote controller and a manufacturing method thereof.

### BACKGROUND

With the popularity of the aerial photography function of unmanned aerial vehicles (UAVs), more and more UAVs need to use a mobile phone as a smart terminal for remote control of the aerial photography.

The remote controller of the existing UAV includes a remote controller body. A mobile phone holding device is provided at the remote controller body and is configured to hold the mobile phone, such that the user can use the mobile phone to remotely control the UAV for performing the aerial photography.

The mobile phone holding device provided at the remote controller occupies a large space, such that the space occupied by the remote controller is expanded and the portability of the remote controller is reduced.

### SUMMARY

The present disclosure provides a remote controller and a manufacturing method thereof to improve the portability of the remote controller.

One aspect of the present disclosure provides a remote controller including:
a remote controller body provided with a control device for a user to input a remote control command;
a holding mechanism configured to hold a mobile terminal; and
a connecting mechanism connected between the remote controller body and the holding mechanism,
wherein the holding mechanism is movably connected to the remote controller body via the connecting mechanism, and the holding mechanism is capable of moving with respect to the remote controller body, such that the holding mechanism is either in an extended state for holding the mobile terminal or in a contracted state that is convenient for carrying the remote controller.

Another aspect of the present disclosure provides a manufacturing method of the remote controller including movably connecting a holding mechanism to a remote controller body via a connecting mechanism to allow the holding mechanism to move with respect to the remote controller body, such that the holding mechanism is either in an extended state for holding a mobile terminal or in a contracted state that is convenient for carrying the remote controller.

Based on the above description, when the remote controller provided by the present disclosure is in use, the user can move the holding mechanism relative to the remote controller body, such that the holding mechanism is in the extended state and the mobile terminal can be held on the holding mechanism, thereby facilitating performing an auxiliary remote control operation via the mobile terminal. After the remote control operation is completed, the user can detach the mobile terminal from the holding mechanism and move the holding mechanism relative to the remote controller body, such that the holding mechanism is in the contracted state, thereby facilitating reducing a space occupied by the remote controller and improving the portability of the remote controller.

### BRIEF DESCRIPTION OF THE DRAWINGS

FIG. 1 is a schematic structural diagram of a remote controller according to an embodiment of the disclosure.
FIG. 2 is a perspective view of the remote controller according to an embodiment of the disclosure.
FIG. 3 is a side view of the remote controller when a holding mechanism is in a contracted state according to an embodiment of the disclosure.
FIG. 4 is a front view of the remote controller when being connected to a mobile terminal according to an embodiment of the disclosure.
FIG. 5 is a perspective view of the remote controller when being connected to the mobile terminal according to an embodiment of the disclosure.
FIG. 6 is a schematic structural diagram of another remote controller according to an embodiment of the disclosure.
FIG. 7 is an exploded view of the other remote controller according to an embodiment of the disclosure.
FIG. 8 is a perspective view of the other remote controller when a holding mechanism is in a contracted state according to an embodiment of the disclosure.
FIG. 9 is a side view of the other remote controller when the holding mechanism is in the contracted state according to an embodiment of the disclosure.
FIG. 10 is a top view of the other remote controller when the holding mechanism is in the contracted state according to an embodiment of the disclosure.
FIG. 11 is a front view of the other remote controller when being connected to a mobile terminal according to an embodiment of the disclosure.
FIG. 12 is a bottom view of the other remote controller when being connected to the mobile terminal according to an embodiment of the disclosure.
FIG. 13 is a top view of the other remote controller when being connected to the mobile terminal according to an embodiment of the disclosure.
FIG. 14 is a side view of the other remote controller when being connected to the mobile terminal according to an embodiment of the disclosure.
FIG. 15 is a schematic structural diagram of a further remote controller when antennas are in a contracted state according to an embodiment of the disclosure.
FIG. 16 is a schematic structural diagram of the further remote controller when the antennas are in a use state according to an embodiment of the disclosure.
FIG. 17 is a schematic structural diagram of an even further remote controller when the antennas are in a use state according to an embodiment of the disclosure.
FIG. 18 is a top view of the even further remote controller in FIG. 17.
FIG. 19 is a schematic partial structural diagram of the even further remote controller when the antennas are in a contracted state according to an embodiment of the disclosure.
FIG. 20 is a cross-sectional view along line A-A in FIG. 19.

### Description of main components and reference numerals

| | |
|---|---|
| Remote controller body | 11 |
| Control device | 111 |
| Receiving component | 112 |
| One-hand grip | 113 |
| Display screen | 114 |
| Antenna | 115 |
| Anti-collision groove | 1151 |

| | |
|---|---|
| Engaging component | 1152 |
| Mating component | 1153 |
| Middle function button | 116 |
| Upper function button | 117 |
| Upper-edge function button | 118 |
| Lock button | 119 |
| Holding mechanism | 12 |
| Handle | 121 |
| Slot | 122 |
| Anti-slip component | 1221 |
| Connecting mechanism | 13 |
| Sliding component | 131 |
| Rotating rod | 132 |
| First rotating shaft | 1321 |
| Second rotating shaft | 1322 |
| Mobile terminal | 21 |

### DETAILED DESCRIPTION OF THE EMBODIMENTS

Exemplary embodiments will be described with reference to the accompanying drawings. In the situation where the technical solutions described in the embodiments are not conflicting, they can be combined.

### First Embodiment

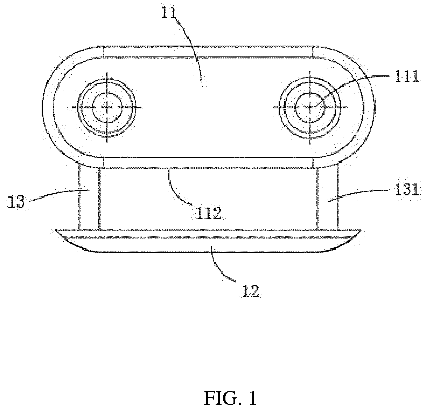

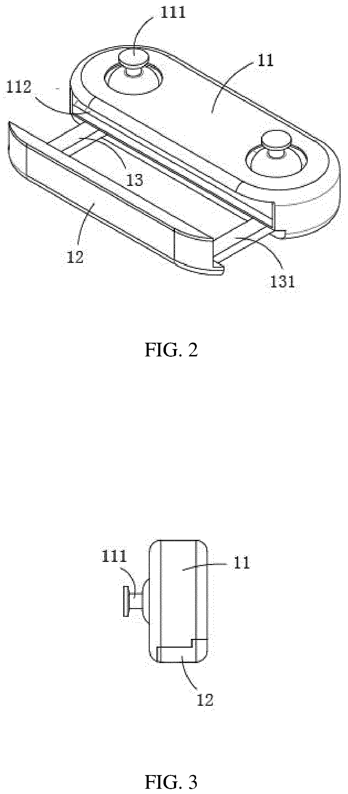

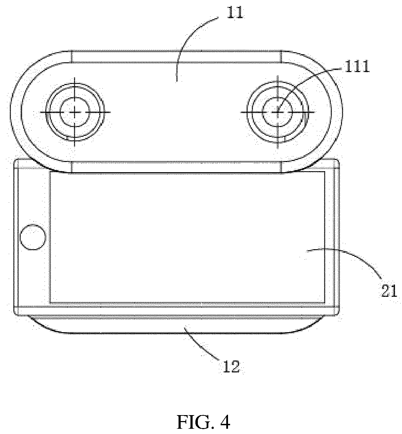

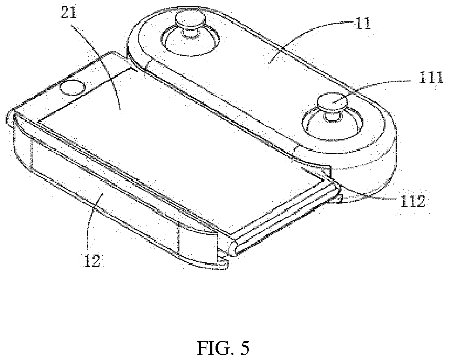

FIG. 1 is a schematic structural diagram of a remote controller according to an embodiment of the disclosure. FIG. 2 is a perspective view of the remote controller according to an embodiment of the disclosure. FIG. 3 is a side view of the remote controller when a holding mechanism is in a contracted state according to an embodiment of the disclosure. FIG. 4 is a front view of the remote controller when being connected to a mobile terminal according to an embodiment of the disclosure. FIG. 5 is a perspective view of the remote controller when being connected to the mobile terminal according to an embodiment of the disclosure.

As shown in FIGs. 1 to 5, the present disclosure provides the remote controller including a remote controller body 11, a holding mechanism 12, and a connecting mechanism 13.

The remote controller body 11 is provided with a control device 111 for a user to input a remote-control command. The holding mechanism 12 is configured to hold a mobile terminal 21. The connecting mechanism 13 is connected between the remote controller body 11 and the holding mechanism 12. The holding mechanism 12 is movably connected to the remote controller body 11 via the connecting mechanism 13. The holding mechanism 12 can move with respect to the remote controller body 11, such that the holding mechanism 12 is either in an extended state for holding the mobile terminal 21, or in a contracted state that is convenient for carrying the remote controller.

In the present embodiment, when the remote controller is in use, the user can move the holding mechanism 12 with respect to the remote controller body 11 to cause the holding mechanism 12 to be in the extended state, such that the mobile terminal 21 can be held on the holding mechanism 12 to facilitate an auxiliary remote control operation via the mobile terminal 21. After the remote control operation is completed, the user can detach the mobile terminal 21 from the holding mechanism 12, and move the holding mechanism 12 with respect to the remote controller body 11 to cause the holding mechanism 12 to be in the contracted state, thereby reducing the space occupied by the remote controller and improving the portability of the remote controller.

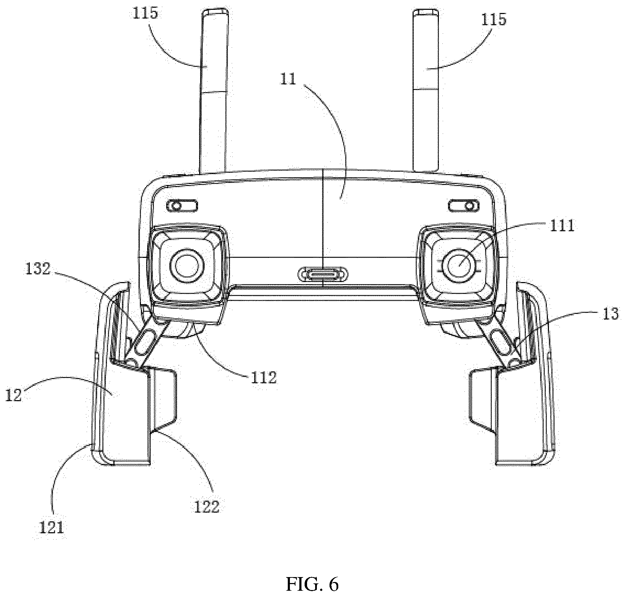

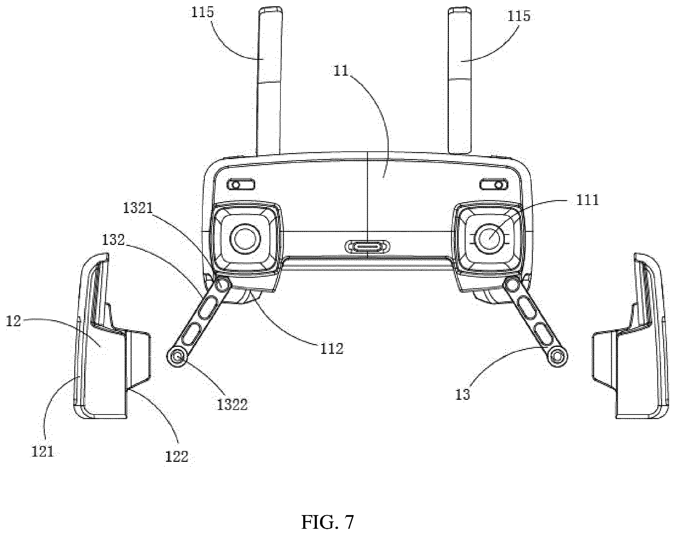

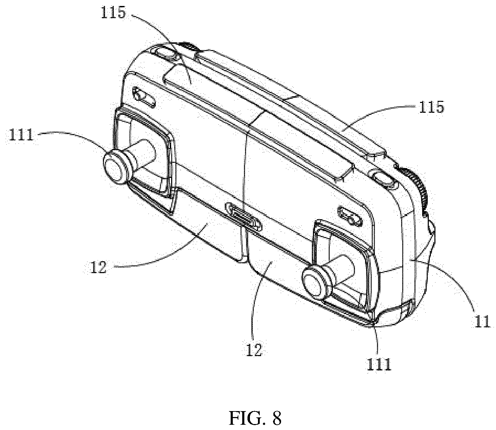

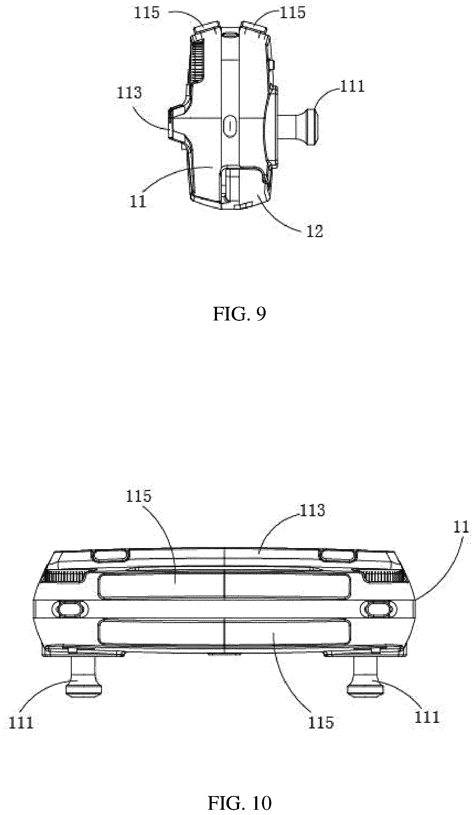

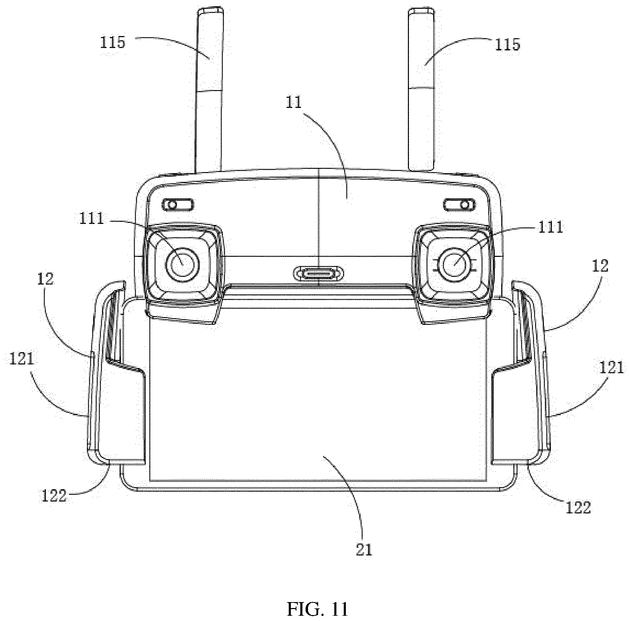

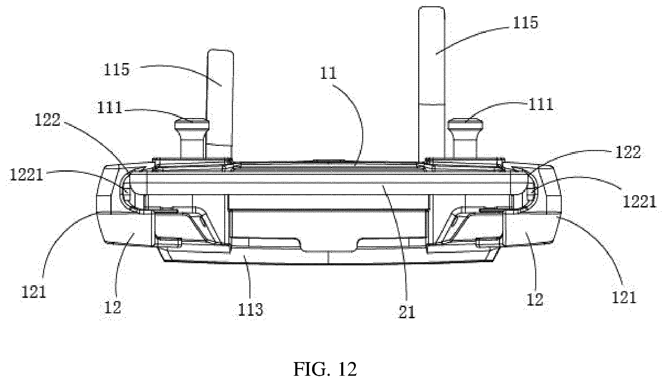

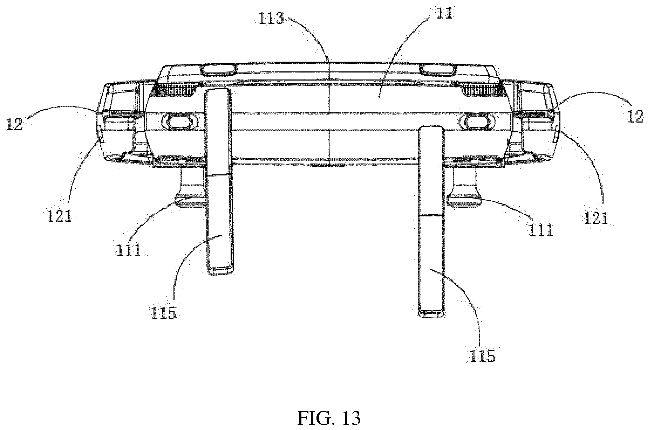

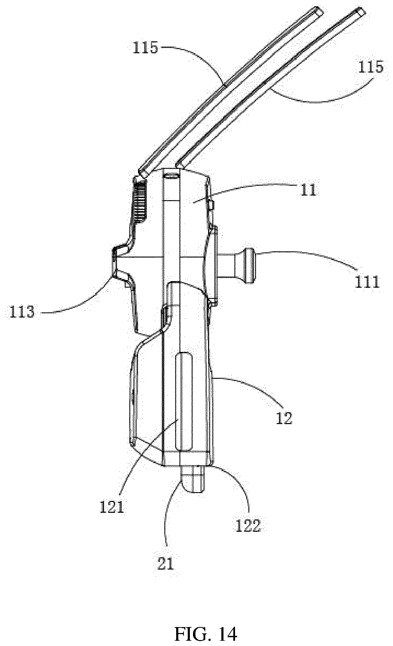

FIG. 6 is a schematic structural diagram of another remote controller according to an embodiment of the disclosure. FIG. 7 is an exploded view of the other remote controller according to an embodiment of the disclosure. FIG. 8 is a perspective view of the other remote controller when the holding mechanism is in a contracted state according to an embodiment of the disclosure. FIG. 9 is a side view of the other remote controller when the holding mechanism is in the contracted state according to an embodiment of the disclosure. FIG. 10 is a top view of the other remote controller when the holding mechanism is in the contracted state according to an embodiment of the disclosure. FIG. 11 is a front view of the other remote controller when being connected to the mobile terminal according to an embodiment of the disclosure. FIG. 12 is a bottom view of the other remote controller when being connected to the mobile terminal according to an embodiment of the disclosure. FIG. 13 is a top view of the other remote controller when being connected to the mobile terminal according to an embodiment of the disclosure. FIG. 14 is a side view of the other remote controller when being connected to the mobile terminal according to an embodiment of the disclosure.

As shown in FIGs. 6 to 14, in the present embodiment, the holding mechanism 12 is movably connected to the remote controller body 11 via the connecting mechanism 13. An included angle of the holding mechanism 12 with respect to the remote controller body 11 in the extended state is greater than the included angle of the holding mechanism 12 with respect to the remote controller body 11 in the contracted state. The user can rotate the holding mechanism 12 with respect to the remote controller body 11 to cause the holding mechanism 12 to be in the extended state, such that the mobile terminal 21 can be held on the holding mechanism 12 to facilitate the auxiliary remote control operation via the mobile terminal 21. After the remote control operation is completed, the user can detach the mobile terminal 21 from the holding mechanism 12, and rotate the holding mechanism 12 with respect to the remote controller body 11 to cause the holding mechanism 12 to be in the contracted state, thereby facilitating the reduction of the occupied space of the remote controller and improving the portability of the remote controller. Therefore, the extend or contract operation of the holding mechanism 12 can be facilitated. Because the included angle of the holding mechanism 12 with respect to the remote controller body 11 in the extended state can be greater than the included angle of the holding mechanism 12 with respect to the remote controller body 11 in the contracted state, the mobile terminal 21 can be easily held on the holding mechanism 12 in the extended state.

As shown in FIGs. 1 to 5, in the present disclosure, the holding mechanism 12 can be slidably connected to the remote controller body 11 via the connecting mechanism 13. A distance between the remote controller body 11 and the holding mechanism 12 in the extended state is greater than the distance between the remote controller body 11 and the holding mechanism 12 in the contracted state. The user can slide the holding mechanism 12 with respect to the remote controller body 11 to cause the holding mechanism 12 to be in the extended state, such that the mobile terminal 21 can be held on the holding mechanism 12 to facilitate the auxiliary remote control operation via the mobile terminal 21. After the remote control operation is completed, the user can detach the mobile terminal 21 from the holding mechanism 12, and slide the holding mechanism 12 with respect to the remote controller body 11 to cause the holding mechanism 12 to be in the contracted state, thereby facilitating the reduction of the occupied space of the remote controller and improving the portability of the remote controller. Therefore, the extend or contract operation of the holding mechanism 12 can be facilitated. Because the distance between the remote controller body 11 and the holding mechanism 12 in the extended state can be greater than the distance between the remote controller body 11 and the holding mechanism 12 in the contracted state, the mobile terminal 21 can be easily held on the holding mechanism 12 in the extended state.

In the present embodiment, the remote controller body 11 includes a front and a plurality of sides connected to the front. One of the sides is a bottom side of the remote controller near the user, when the remote controller is in a use state. The control device 111 is provided at the front of the remote controller body 11. The holding mechanism 12 holds the mobile terminal 21 at a position close to the bottom side. Because the bottom side is close to the user when the remote controller is in the use state and the holding mechanism 12 can hold the mobile terminal 21 near to the bottom side, such that the mobile terminal 21 can be close to the user when the remote controller is in the use state, thereby facilitating the user to operate the mobile terminal 21.

In the present embodiment, the holding mechanism 12 abuts against the bottom side in the contracted state. As such, the holding mechanism 12 can be in contact with the bottom side in the contracted state, which further reduces the space occupied by the remote controller and improves the portability of the remote controller. In addition, the bottom side can also support the holding mechanism 12, thereby improving the stability of the holding mechanism 12 in the contracted state. In some embodiments, the holding mechanism 12 may also abut against the front or other sides of the remote controller body 11 in the contracted state.

In the present embodiment, when the holding mechanism 12 is in the extended state, the mobile terminal 21 abuts against the bottom side. In some other embodiments, when the holding mechanism 12 is in the extended state, the holding mechanism 12 can hold the mobile terminal 21 above or below the front. As such, the bottom side or the front of the remote controller body 11 can support the mobile terminal 21, thereby improving the stability of the mobile terminal 21.

In the present embodiment, the holding mechanism 12 can hold the mobile terminal 21 at a position close to the control device 111. As such, a distance between the mobile terminal 21 and the control device 111 can be relatively close, thereby reducing a distance by which the user's hand moves between the control device 111 and the mobile terminal 21, which facilitates the user to perform a switching operation between the control device 111 and the mobile terminal 21.

### Second Embodiment

On the basis of the first embodiment, a receiving component 112 is provided in the remote controller body 11. The holding mechanism 12 can be located at least partially inside the receiving component 112 in the contracted state. The holding mechanism 12 can protrude from the receiving component 112 in the extended state. Because the holding mechanism 12 can be located at least partially inside the receiving component 112 in the contracted state, the space occupied by the remote controller can be further reduced, and the portability of the remote controller can be improved.

In the present embodiment, preferably, the connecting mechanism 13 can be provided inside the receiving component 112. As such, the connecting mechanism 13 does not occupy the external space of the remote controller body 11, thereby further reducing the space occupied of the remote controller, improving the portability of the remote controller, and enhancing the overall appearance of the remote controller. In some other embodiments, the connecting mechanism 13 can be also provided outside the receiving component 112.

As shown in FIGs. 1 to 5, in the present embodiment, preferably, the connecting mechanism 13 includes a sliding component 131. The sliding component 131 is fixedly connected to the holding mechanism 12 and is slidingly connected to the remote controller body 11. Therefore, through a relative sliding between the sliding component 131 and the remote controller body 11, the holding mechanism 12 can be driven to slide relative to the remote controller body 11, such that the reliability of the sliding of the holding mechanism 12 can be improved.

In the present embodiment, preferably, the sliding component 131 can be a slide bar and the slide bar can be provided in the receiving component 112. The slide bar can slide inside the receiving component 112 to cause the holding mechanism 12 to be closer to or away from the receiving component 112. As such, the structure of the connecting mechanism 13 can be simple and the use of the connecting mechanism 13 can be reliable.

In the present embodiment, preferably, the holding mechanism 12 can be received inside the receiving component 112 in the contracted state. As such, the size of the remote controller can be further reduced, the portability of the remote controller can be improved, and the overall appearance of the remote controller 110 can be enhanced.

In the present embodiment, preferably, the holding mechanism 12 is configured to abut against a side of the mobile terminal 21, such that the mobile terminal 21 can be held between the holding mechanism 12 and a side of the remote controller body 11 where the receiving component 112 is located. As such, the holding of the mobile terminal 21 can be more reliable.

In the present embodiment, preferably, an outer side of an opening edge of the receiving component 112 is configured to abut against the other side of the mobile terminal 21. As such, the holding of the mobile terminal 21 can be more reliable.

In the present embodiment, preferably, the connecting mechanism 13 can also include a guide component that cooperates with the sliding component 131, such that the sliding component 131 can be slide along a preset direction. Therefore, the reliability of the sliding of the holding mechanism 12 can be further improved.

In the present embodiment, the guide component can be a guide groove or a guide rail provided in the receiving component 112. As such, the structure of the guide component can be simple and the use of the guide component can be reliable.

### Third Embodiment

As shown in FIGs. 6 to 14, on the basis of the first embodiment, the connecting mechanism 13 includes a rotating rod 132. An end of the rotating rod 132 is rotatably connected to the remote controller body 11 and the other end of the rotating rod 132 is rotatably connected to the holding mechanism 12. As such, by rotating the rotating rod 132 relative to the remote controller body 11 and rotating the holding mechanism 12 relative to the rotating rod 132, the holding mechanism 12 can be extended or contracted. The operation can be simple and the use can be reliable.

In the present embodiment, preferably, a first rotating shaft 1321 is provided at an end of the rotating rod 132 and a second rotating shaft 1322 is provided at the other end of the rotating rod 132. The rotating rod 132 is rotatably connected to the remote controller body 11 via the first rotating shaft 1321. The rotating rod 132 is rotatably connected to the holding mechanism 12 via the second rotating shaft 1322. By rotating the rotating rod 132 about the first rotating shaft 1321 with respect to the remote controller body 11 and rotating the holding mechanism 12 about the second rotating shaft 1322 with respect to the rotating rod 132, the holding mechanism 12 can be extended or contracted. As such, the structure of the connecting mechanism 13 can be simple and the use of the connecting mechanism 13 can be reliable.

In the present embodiment, preferably, the first rotating shaft 1321 and/or the second rotating shaft 1322 can be a damping shaft. As such, a positioning between the rotating rod 132 and the remote controller body 11, a positioning between the rotating rod 132 and the holding mechanism 12, or a positioning between the holding mechanism 12 and the remote controller body 11 can be conveniently achieved. Of course, the positioning between any two of the rotating rod 132, the remote controller body 11, and the holding mechanism 12 can be achieved by adding another positioning component.

In the present embodiment, preferably, an axis of the first rotating shaft 1321 can be parallel to an axis of the second rotating shaft 1322. As such, a force perpendicular to the axis of the first rotating shaft 1321 and the axis of the second rotating shaft 1322 can be applied to the holding mechanism 12 to achieve the extend and contract operation of the holding mechanism 12. The operation can be simple and convenient. Of course, the axis of the first shaft 1321 and the axis of the second shaft 1322 can also be perpendicular to each other or form another angle, as long as the extend and contract operation of the holding mechanism 12 can be achieved.

In the present embodiment, preferably, the control device 111 can be an operating lever. The operating lever can automatically reset to a middle position of an active area of the operating lever. When the operating lever is in the middle position, the first rotating shaft 1321 and the second rotating shaft 1322 are parallel to the operating lever. As such, the holding mechanism 12 can be extended or contracted in a direction perpendicular to the operating lever, such that the holding mechanism 12 in the extended state can be located outside the operating lever, which facilitated an installation of the mobile terminal 21, and the mobile terminal 21 can also be located outside the operating lever, which facilitates the user to operate the operating lever and the mobile terminal 21.

In the present embodiment, preferably, the holding mechanism 12 can include a clamping component. Two holding mechanisms 12 are provided. Both of the two holding mechanisms 12 are rotatably connected to the remote controller body 11 via two rotating rods 132. The two holding mechanisms 12 are configured to clamp two ends of the mobile terminal 21 through the clamping component in the extended state, and cooperate with each other to clamp and position the mobile terminal 21. As such, the reliability of the holding of the mobile terminal 21 by the holding mechanism 12 can be improved.

### Fourth Embodiment

On the basis of the above embodiments, the holding mechanism 12 includes a handle 121. The connecting mechanism 13 is connected to the handle 121. The handle 121 can be located outside the remote controller body 11 in the extended state for the user to hold. The handle 121 can increase the size of the remote controller in the use state, which is convenient for the user to hold.

In the present embodiment, preferably, the handle 121 can abut against an edge of the remote controller body 11 in the contracted state, or can be located at least partially inside the remote controller body 11 in the contracted state. As such, the space occupied by the remote controller can be further reduced, the portability of the remote controller can be improved, and the overall appearance of the remote controller can be enhanced.

Furthermore, when the handle 121 is in the contracted state, it is convenient to hold the remote controller with one hand and perform a one-handed operation, and when the handle 121 is in the extended state, it is convenient for both hands to hold the remote controller and perform a two-handed operation. As such, the handle 121 can be selectively in the contracted state or the extended state, which is convenient for the remote controller to switch between the two-hand operation and the one-handed operation.

In the present embodiment, preferably, two handles 121 are provided. The two handles 121 are spaced apart in the extended state, and the mobile terminal 21 is held between the two handles 121. As such, the handles 121 can directly hold the mobile terminal 21 without the need of other connectors, and the structure can be simple and the operation can be convenient.

In the present embodiment, preferably, two holding mechanisms 12 are provided. Each of the holding mechanisms 12 is provided with a handle 121. The two holding mechanisms 12 are spaced apart in the extended state, such that a holding space for holding the mobile terminal 21 is formed between the two holding mechanisms 12. Therefore, through holding the mobile terminal 21 by the holding mechanism 12, the stability of the holding of the mobile terminal 21 can be ensured.

On the basis of the above embodiments, a slot 122 is provided at the holding mechanism 12. The slot 122 is configured to hold the mobile terminal 21. As such, the stability of the holding of the mobile terminal 21 can be ensured.

In the present embodiment, preferably, an anti-slip component 1221 is provided inside the slot 122. The anti-slip component 1221 is configured to contact with the mobile terminal 21. As such, the anti-slip component 1221 can apply resistance to the mobile terminal 21 and prevent the mobile terminal 21 from slipping.

On the basis of the above embodiments, a one-hand grip 113 is provided at a back side of the remote controller body 11. As such, the user can hold the one-hand grip 113 when operating with one hand, thereby improving the stability of holding the remote controller with one hand.

In the present embodiment, preferably, the one-hand grip 113 can be a bar-shaped protrusion. The bar-shaped protrusion can extend along a length direction of the back side of the remote controller body 11. As such, the one-hand grip 113 can be easily held by the user.

On the basis of the above embodiments, the holding mechanism 12 can be in contact with an edge of the remote controller body 11 in the contracted state. As such, the space occupied by the remote controller can be reduced and the portability of the remote controller can be improved.

On the basis of the above embodiments, the control device 111 is provided at the front of the remote controller body 11, and a display screen 114 and/or an operation button are also provided at the front of the remote controller body 11. In some embodiments, the display screen 144 can be a touch screen. As such, the user can easily operate the control device 111, the display screen 114, and/or the operation button.

In the present embodiment, preferably, two control devices 111 are provided. The two control devices 111 are spaced apart along a length direction of the front of the remote controller body 11. The display screen 114 and/or the operation button can be provided between the two control devices 111. As such, the convenience of the user's operation of the control devices 111, the display screen 114, and/or the operation button can be further improved.

### Fifth Embodiment

On the basis of the above embodiments, an antenna 115 can be provided at a side of the remote controller body 11. The antenna 115 can be rotatably connected to the remote controller body 11. The antenna 115 can be rotated with respect to the remote controller body 11, such that the antenna 115 can be extended to a use state or folded in a contracted state. Therefore, when the antenna 115 is folded in the contracted state, the space occupied by the remote controller can be reduced and the portability of the remote controller can be improved.

As shown in FIGs. 6 to 14, in the present embodiment, two antennas 115 are provided. The two antennas 115 can be folded and arranged parallel to each other. Because the two antennas 115 are folded parallel to each other, the occupied space of the remote controller can be further reduced and the portability of the remote controller can be further improved. In some embodiments, the lengths of the two antennas 115 can be the same.

In the present embodiment, preferably, a receiving groove can be provided at a side of the remote controller body 11. The two antennas 115 can be received in the receiving groove after being folded. As such, the space occupied by the remote controller can be further reduced, and the portability of the remote controller can be improved.

In the present embodiment, preferably, the antennas 115 can touch a side of the remote controller body 11. As such, the space occupied by the remote controller can be further reduced, and the portability of the remote controller can be improved.

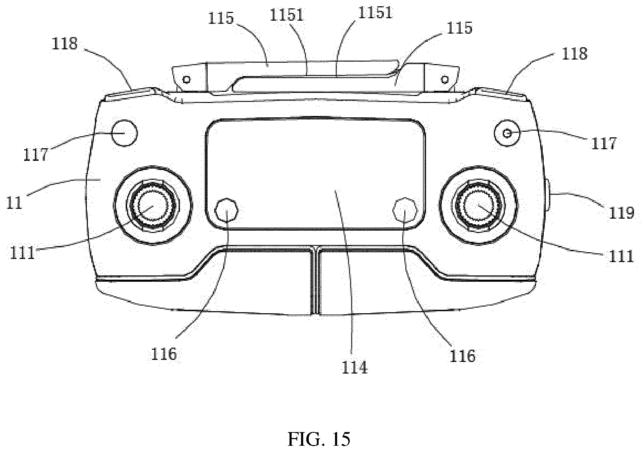

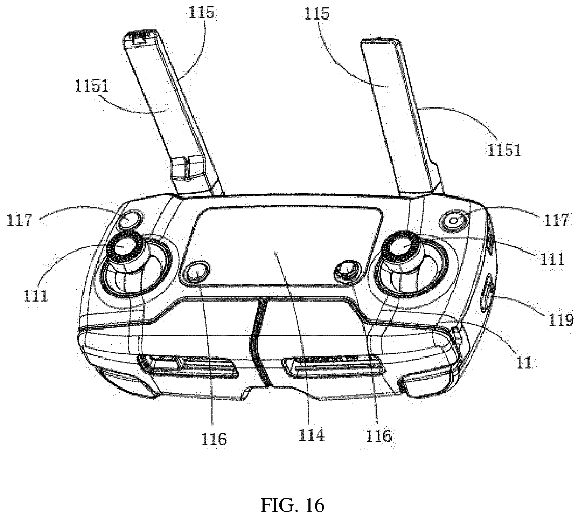

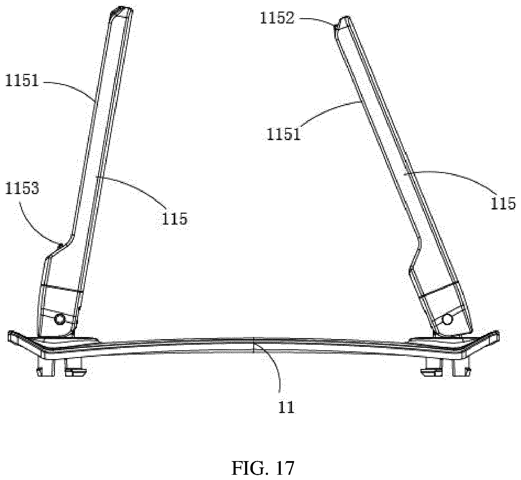

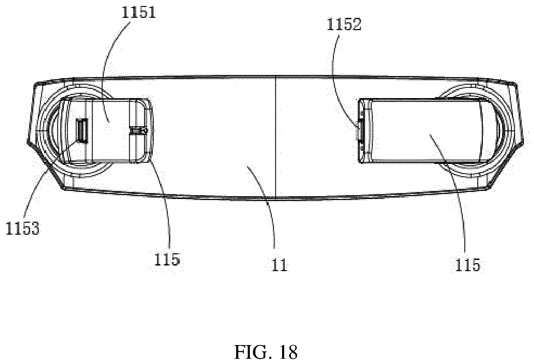

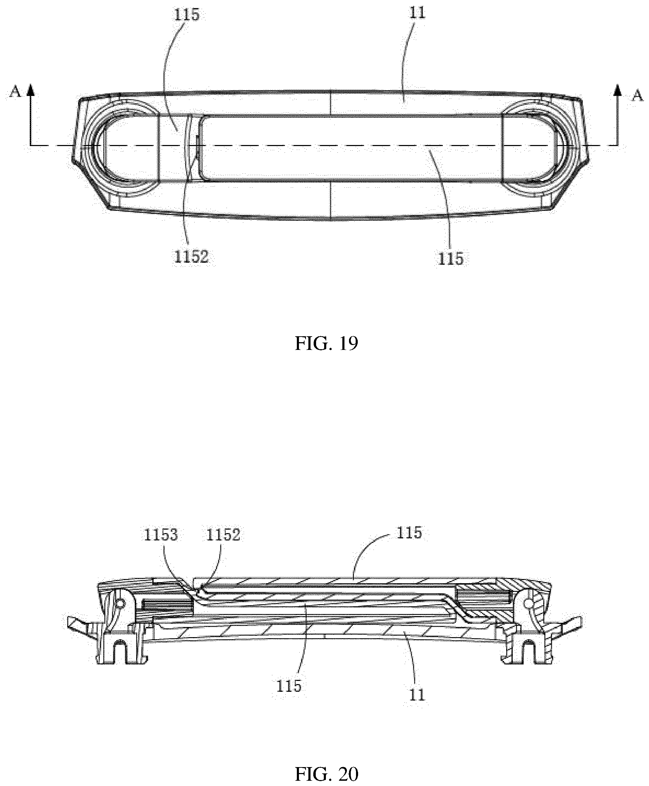

FIG. 15 is a schematic structural diagram of a further remote controller when the antennas are in a contracted state according to an embodiment of the disclosure. FIG. 16 is a schematic structural diagram of the further remote controller when the antennas are in a use state according to an embodiment of the disclosure. FIG. 17 is a schematic structural diagram of an even further remote controller when the antennas are in the use state according to an embodiment of the disclosure. FIG. 18 is a top view of the remote controller in FIG. 17. FIG. 19 is a schematic partial structural diagram of another remote controller when the antennas are in a contracted state according to an embodiment of the disclosure. FIG. 20 is a cross-sectional view along line A-A in FIG. 19.

As shown in FIGs. 15 to 20, in the present embodiment, preferably, two antennas 115 are provided. The two antennas 115 are stacked after being folded. As such, the space occupied by the remote controller can be further reduced, and the portability of the remote controller can be improved.

In the present embodiment, preferably, an anti-collision groove 1151 is provided at each of the two antennas 115 in a thickness direction. The two anti-collision grooves 1151 of the two antennas 115 are overlapped after being folded, such that the stacked thickness of the two antennas 115 is substantially equal to the maximum thickness of the single antenna 115. As such, the space occupied by the remote controller can be further reduced and the portability of the remote controller can be improved. For example, the thickness difference between the stacked thickness of the two antennas 115 and the maximum thickness of the single antenna 115 is less than or equal to about 5 mm.

In the present embodiment, preferably, an engaging component 1152 is provided at one of the two antennas 115, and a mating component 1153 is provided at the other one of the two antennas 115. The engaging component 1152 can be engaged with the mating component 1153, such that the two antennas 115 can be positioned after being folded. As such, the stability of the folded antennas 115 can be improved, and the antennas 115 can be prevented from rotating with respect to the remote controller body 11 under an external force.

In the present embodiment, an end of each of the antennas 115 can be rotatably connected to the remote controller body 11 through a universal connector or a rotating shaft. As such, the two antennas 115 can be rotated in multiple directions, and the antennas 115 can be easily extended and folded.

In the present embodiment, preferably, the antennas 115 have a flat structure. When the two antennas 115 are in the use state, the thickness directions of the two antennas 115 are directed toward the user. As such, the two antennas 115 can be more beautiful in the use state, and the occupied space of the remote controller in the contracted state can be further reduced, and the portability of the remote controller can be improved.

In the present embodiments, the antennas 115 are curved in the length direction. Curved shapes are the same as the shape of a side of the remote controller body 11 close to the antennas 115, such that the antennas 115 can be closely attached to the side of the remote controller body 11. As such, the occupied space of the remote controller in the contracted state can be further reduced, and the portability of the remote controller can be improved.

In the present embodiment, the antennas 115 are switched from the contracted state to the use state after being rotated a preset angle. The preset angle can be set according to actual conditions, thereby facilitating the extend and fold operation of the two antennas 115.

In the present embodiment, preferably, the preset angle can be greater than 60 degrees and less than 120 degrees. As such, the extend and fold operation of the antennas 115 can be facilitated.

### Sixth Embodiment

On the basis of the above embodiments, the control device 111 is located at the front of the remote controller body 11. The control device 111 is configured to control a movement direction of a remotely-controlled mobile platform. As such, the user can easily operate the control device 111.

In the present embodiment, preferably, two control devices 111 are provided. The two control devices 111 are spaced apart. As such, the user can easily perform two-handed operation on the control devices 111.

As shown in FIGs. 15 and 16, in the present embodiment, preferably, a middle function button 116 is provided at the front of the remote controller body 11. The middle function button 116 is located between the two control devices 111. As such, the user can easily operate the control devices 111 and the middle function button 116.

In the present embodiment, the middle function button 116 can be an emergency stop button configured to stop the movement of the remotely-controlled mobile platform. As such, when the remotely-controlled mobile platform encounters an obstacle during the movement, the user can control the remotely-controlled mobile platform to change from a motion state to a stop state via the middle function button 116, thereby preventing the remotely-controlled mobile platform from colliding with the obstacle.

In the present embodiment, preferably, the emergency stop button can be located in a left side area of the front of the remote controller body 11. Thus, the user can easily operate the emergency stop key with his left hand.

In the present embodiment, preferably, the middle function button 116 can be a custom function button. The user can set the function of the custom function button according to their own needs, thereby facilitating the operation.

In the present embodiment, preferably, the custom function key can be located in a right side area of the front of the remote controller body 11. Therefore, the user can easily operate the custom function button with his right hand.

In the present embodiment, preferably, two middle function buttons are provided. The two middle function-buttons 116 are spaced apart along the length direction of the front of the remote controller body 11.

In the present embodiment, preferably, an upper function button 117 is provided at an upper side of the remote control body 11. The upper function button 117 is located above the control device 111. As such, the user can easily operate the control device 111 and the upper function button 117.

In the present embodiment, preferably, the upper function button 117 can be a return button configured to return the remotely-controlled mobile platform to a preset position. As such, the remotely-controlled mobile platform can be conveniently returned to the preset position, thereby facilitating the recycling of the remotely-controlled mobile platform.

In the present embodiment, preferably, the return button can be located in the left side area of the front of the remote controller body 11. As such, the user can easily operate the return button with his left hand.

In the present embodiment, preferably, the upper function button 117 can be a power switch key configured to control power on and off of the remote controller. As such, the power on and off of the remote controller can be easily controlled via the power switch key.

In the present embodiment, preferably, the power switch key can be located in the right side area of the front of the remote controller body 11. As such, the user can easily operate the power switch key with his right hand.

In the present embodiment, preferably, two upper function buttons 117 are provided. The two upper function buttons 117 are spaced apart along the length direction of the front of the remote controller body 11.

In the present embodiment, preferably, an upper-edge function button 118 is provided at the upper side of the remote controller body 11. As such, the user can easily operate the upper-edge function button 117.

In the present embodiment, preferably, the upper-edge function button 118 can be a video button configured to control a camera of the remotely-controlled mobile platform to record video. As such, the camera of the remotely-controlled mobile platform can be conveniently controlled for recording.

In the present embodiment, preferably, the video button can be located in a left side area of the upper side of the remote controller body 11. As such, the user can easily operate the video button with the left hand.

In the present embodiment, preferably, the upper-edge function button 118 can be a photographing button configured to control the camera of the remotely-controlled mobile platform to shoot an image. As such, the camera of the remotely-controlled mobile platform can be conveniently controlled for shooting pictures.

In the present embodiment, preferably, the photographing button can be located in a right side area of the upper side of the remote controller body 11. As such, the user can easily operate the photographing button with his right hand.

In the present embodiment, preferably, two upper-edge function button 118 are provided. The two upper-edge function buttons 118 are spaced apart along a length direction of the upper side of the remote controller body 11.

In the present embodiment, preferably, a lock button 119 is provided at the remote controller body 11 and is configured to control the remote controller to enter a locked state. As such, the remote controller can be easily controlled to enter the locked state and can be prevented from disoperation.

In the present embodiment, preferably, the lock button 119 can be provided at a right side of the remote controller body 11. As such, the user can easily operate the lock button 119 with the right hand.

In the present embodiment, preferably, the lock button 119 can be a push button, a touch button, a toggle switch, or a spin button. As such, the user can easily operate the lock button 119.

In the present embodiment, preferably, the remote-controlled mobile platform can be an unmanned aerial vehicle (UAV). Thus, the user can control the UAV using the remote controller. In some other embodiments, the remotely-controlled mobile platform can also be a remote control car or a remote control ship.

### Seventh Embodiment

The present embodiment provides a manufacturing method of the remote controller including movably connecting a holding mechanism 12 to a remote controller body 11 via a connecting mechanism 13 to allow the holding mechanism 12 to move with respect to the remote controller body 11, such that the holding mechanism 12 is either in an extended state for holding a mobile terminal 21 or in a contracted state that is convenient for carrying the remote controller.

Therefore, the user can move the holding mechanism 12 with respect to the remote controller body 11 to cause the holding mechanism 12 to be in the extended state, such that the mobile terminal 21 can be held on the holding mechanism 12 to facilitate an auxiliary remote control operation via the mobile terminal 21. After the remote control operation is completed, the user can detach the mobile terminal 21 from the holding mechanism 12, and move the holding mechanism 12 with respect to the remote controller body 11 to cause the holding mechanism 12 to be in the contracted state, thereby facilitating the reduction of the occupied space of the remote controller and improving the portability of the remote controller.

Preferably, the holding mechanism 12 can be rotatably connected to the remote controller body 11 via the connecting mechanism 13. The holding mechanism 12 can rotate with respect to the remote controller body 11, such that the holding mechanism 12 can be either in the extended state for holding the mobile terminal 21, or in the contracted state that is convenient for carrying the remote controller.

The user can rotate the holding mechanism 12 with respect to the remote controller body 11 to cause the holding mechanism 12 to be in the extended state, such that the mobile terminal 21 can be held on the holding mechanism 12 to facilitate an auxiliary remote control operation via the mobile terminal 21. After the remote control operation is completed, the user can detach the mobile terminal 21 from the holding mechanism 12, and move the holding mechanism 12 with respect to the remote controller body 11 to cause the holding mechanism 12 to be in the contracted state, thereby facilitating the reduction of the occupied space of the remote controller and improving the portability of the remote controller.

Preferably, the holding mechanism 12 can be slidably connected to the remote controller body 11 via the connecting mechanism 13. The holding mechanism 12 can slide with respect to the remote controller body 11, such that the holding mechanism 12 is either in the extended state for holding the mobile terminal 21, or in the contracted state for easily carrying the remote controller.

The user can slide the holding mechanism 12 with respect to the remote controller body 11 to cause the holding mechanism 12 to be in the extended state, such that the mobile terminal 21 can be held on the holding mechanism 12 to facilitate the auxiliary remote control operation via the mobile terminal 21. After the remote control operation is completed, the user can detach the mobile terminal 21 from the holding mechanism 12, and slide the holding mechanism 12 with respect to the remote controller body 11 to cause the holding mechanism 12 to be in the contracted state, thereby facilitating the reduction of the occupied space of the remote controller and improving the portability of the remote controller. Therefore, the extend or contract operation of the one or more holding mechanisms 12 can be facilitated.

Preferably, a receiving component 112 can be provided at the remote controller body 11. The holding mechanism 12 can be movably connected to the remote controller body 11 via the connecting mechanism 13. The holding mechanism 12 can move with respect to the remote controller body 11, such that the holding mechanism 12 can be either in an extended state for holding the mobile terminal 21, or in a contracted state for easily carrying the remote controller, and the holding mechanism 12 can be located at least partially inside the receiving component 112 in the contracted state.

Because the holding mechanism 12 can be located at least partially inside the receiving component 112 in the contracted state, the space occupied by the remote controller can be further reduced, and the portability of the remote controller can be improved.

Preferably, after the processes described above, a handle 121 can be provided at the holding mechanism 12. The connecting mechanism 13 can be connected to the handle 121. The handle 121 can be located outside the remote controller body 11 in the extended state for the user to hold.

The handle 121 can increase the size of the remote controller in the use state, which is convenient for the user to hold.

Finally, it should be noted that the above embodiments are merely for explaining the technical solutions of the present disclosure, and are not intended to be limiting. Although the present disclosure has been described in detail with reference to the foregoing embodiments, those skilled in the art will understand that the technical solutions described in the foregoing embodiments may be modified, or some or all of the technical features may be equivalently replaced. These modifications or substitutions do not cause the essence of the technical solutions to depart from the scope of the embodiments of the present disclosure.

Various embodiments have been described. The present invention may also (alternatively) be described by the below numbered aspects 1 to 72.

### ASPECTS

### WHAT IS ASPECTED IS:

1. A remote controller, characterized in that, comprising:
   a remote controller body including a control device for a user to input a remote-control command;
   a holding mechanism configured to hold a mobile terminal; and
   a connecting mechanism connected between the remote controller body and the holding mechanism;
   wherein the holding mechanism is movably connected to the remote controller body via the connecting mechanism and the holding mechanism moves with respect to the remote controller body, such that the holding mechanism is either in an extended state for holding the mobile terminal or in a contracted state that is convenient for carrying the remote controller.
2. The remote controller according to Aspect 1, characterized in that, the holding mechanism is rotatably connected to the remote controller body via the connecting mechanism and an included angle of the holding mechanism with respect to the remote controller body is greater in the extended state than in the contracted state.
3. The remote controller according to Aspect 1, characterized in that, the holding mechanism is slidably connected to the remote controller body via the connecting mechanism and a distance between the holding mechanism and the remote controller body is greater in the extended state than in the contracted state.
4. The remote controller according to Aspect 1, characterized in that:
   the remote controller body includes a front and a plurality of sides connected to the front, the plurality of sides including a bottom side;
   wherein, the control device is provided at the front of the remote controller body and the holding mechanism is configured to hold the mobile terminal at a position close to the bottom side.
5. The remote controller according to Aspect 4, characterized in that, the holding mechanism is configured to abut against the bottom side in the contracted state.
6. The remote controller according to Aspect 4, characterized in that:
   when being in the extended state, the holding mechanism holds the mobile terminal against the bottom side; or
   when being in the extended state, the holding mechanism holds the mobile terminal above or below the front.
7. The remote controller according to Aspect 4, characterized in that:
   the holding mechanism holds the mobile terminal at a position close to the control device.
8. The remote controller according to Aspect 1, characterized in that, the remote controller body is provided with a receiving component and the holding mechanism is provided at least partially inside the receiving component in the contracted state and protrudes from the receiving component in the extended state.
9. The remote controller according to Aspect 8, characterized in that, the connecting mechanism is provided inside the receiving component.
10. The remote controller according to Aspect 8, characterized in that, the connecting mechanism includes a sliding component fixedly connected to the holding mechanism and slidingly connected to the remote controller body.
11. The remote controller according to Aspect 10, characterized in that, the sliding component is a slide bar, the slide bar is provided in the receiving component, and the slide bar slides inside the receiving component to cause the holding mechanism to be closer to or away from the receiving component.
12. The remote controller according to Aspect 11, characterized in that, the holding mechanism is provided inside the receiving component in the contracted state.
13. The remote controller according to Aspect 10, characterized in that, the holding mechanism is configured to abut against a side of the mobile terminal to hold the mobile terminal between the holding mechanism and a side of the remote controller body where the receiving component is located.
14. The remote controller according to Aspect 13, characterized in that, an outer side of an opening edge of the receiving component is configured to abut against the other side of the mobile terminal.
15. The remote controller according to Aspect 13, characterized in that, the receiving component is configured to receive the other side of the mobile terminal.
16. The remote controller according to Aspect 8, characterized in that, the connecting mechanism includes a guide component and the guide component cooperates with the sliding component to cause the sliding component to slide along a preset direction.
17. The remote controller according to Aspect 16, characterized in that, the guide component is a guide groove or a guide rail provided in the receiving component.
18. The remote controller according to Aspect 1, characterized in that, the connecting mechanism includes a rotating rod, an end of the rotating rod is rotatably connected to the remote controller body, and another end of the rotating rod is rotatably connected to the holding mechanism.
19. The remote controller according to Aspect 18, characterized in that, a first rotating shaft is provided at an end of the rotating rod, a second rotating shaft is provided at the other end of the rotating rod, the rotating rod is rotatably connected to the remote controller body via the first rotating shaft, and the rotating rod is rotatably connected to the holding mechanism via the second rotating shaft.
20. The remote controller according to Aspect 19, characterized in that, the first rotating shaft and/or the second rotating shaft are damping shafts.
21. The remote controller according to Aspect 19, characterized in that, an axis of the first rotating shaft is parallel to an axis of the second rotating shaft.
22. The remote controller according to Aspect 19, characterized in that:
   the control device includes an operating lever that automatically resets to a middle position of an active area of the operating lever;
   wherein, when the operating lever is in the middle position, the first rotating shaft and the second rotating shaft are parallel to the operating lever.
23. The remote controller according to Aspect 22, characterized in that, the holding mechanism includes a clamping component, two holding mechanisms are provided, the two holding mechanisms are rotatably connected to the remote controller body via two rotating rods, and the two holding mechanisms are configured to clamp two ends of the mobile terminal through the clamping component in the extended state and cooperate with each other to clamp and position the mobile terminal.
24. The remote controller according to Aspect 1, characterized in that, the holding mechanism includes a handle connected to the connecting mechanism and located outside the remote controller body in the extended state for being held by the user.
25. The remote controller according to Aspect 24, characterized in that:
   the handle abuts against an edge of the remote controller body in the contracted state; or
   the handle is received at least partially inside the remote controller body in the contracted state.
26. The remote controller according to Aspect 25, characterized in that, two handles are provided and the two handles are spaced apart from each other in the extended state to clamp the mobile terminal between the two handles.
27. The remote controller according to Aspect 24, characterized in that, two holding mechanisms are provided, each holding mechanism is provided with a handle, and the two holding mechanisms are spaced apart from each other in the extended state to form a holding space between the two holding mechanisms for holding the mobile terminal.
28. The remote controller according to Aspect 1, characterized in that, the holding mechanism includes a slot configured to hold the mobile terminal.
29. The remote controller according to Aspect 28, characterized in that, an anti-slip component is provided inside the slot and is configured to contact with the mobile terminal.
30. The remote controller according to Aspect 1, characterized in that, the remote controller body is provided with a one-hand grip on a back side of the remote controller body.
31. The remote controller according to Aspect 30, characterized in that, the one-hand grip is a bar-shaped protrusion extending along a length direction of the back side of the remote controller body.
32. The remote controller according to Aspect 1, characterized in that, the holding mechanism is configured to contact an edge of the remote controller body in the contracted state.
33. The remote controller according to any one of Aspects 1 to 32, characterized in that, the control device is provided at a front of the remote controller body and the remote controller body further includes a display screen and/or an operation button on the front of the remote controller body.
34. The remote controller according to Aspect 33, characterized in that:
   two control devices are provided and are spaced apart along a length direction of the front of the remote controller body, and the display screen and/or the operation button are provided between the two control devices.
35. The remote controller according to any one of Aspects 1 to 32, characterized in that, an antenna provided at a side of the remote controller body and rotatably connected to the remote controller body, and the antenna rotates relative to the remote controller body to cause the antenna to be extended or folded.
36. The remote controller according to Aspect 35, characterized in that, two antennas are provided and are parallel to each other when folded.
37. The remote controller according to Aspect 36, characterized in that, a receiving groove is provided at a side of the remote controller body and the two antennas are received in the receiving groove after being folded.
38. The remote controller according to Aspect 36, characterized in that, the antenna touches a side of the remote controller body.
39. The remote controller according to Aspect 35, characterized in that, two antennas are provided and are stacked when folded.
40. The remote controller according to Aspect 39, characterized in that, an anti-collision groove is provided at each antenna in a thickness direction, and the anti-collision grooves of the two antennas overlap with each other when the two antennas are folded to cause a stacked thickness of the two antennas to be equal to a maximum thickness of one of the two antennas.
41. The remote controller according to Aspect 39, characterized in that, an engaging component is provided at one of the two antennas, and a mating component is provided at the other one of the two antennas, and the engaging component is engaged with the mating component to position the two antennas after the two antennas are folded.
42. The remote controller according to Aspect 35, characterized in that, an end of the antenna is rotatably connected to the remote controller body through a universal connector or a rotating shaft.
43. The remote controller according to Aspect 35, characterized in that, the antenna has a flat structure and a thickness direction of the antenna in a use state is directed toward a user.
44. The remote controller according to Aspect 43, characterized in that, the two antennas are curved in a length direction, and curved shapes are the same as the shape of a side of the remote controller body close to the two antennas, such that the two antennas are closely attached to the side of the remote controller body.
45. The remote controller according to Aspect 43, characterized in that, the antenna is switched to the use state in response to being rotated a preset angle.
46. The remote controller according to Aspect 45, characterized in that, the preset angle is greater than 60 degrees and less than 120 degrees.
47. The remote controller according to any one of Aspects 1 to 32, characterized in that, the control device is located on a front of the remote controller body and configured to control a movement direction of a remotely-controlled mobile platform.
48. The remote controller according to Aspect 47, characterized in that, two control devices are provided and are spaced apart from each other.
49. The remote controller according to Aspect 48, characterized in that, the remote controller body is further provided with a middle function button at the front of the remote controller body and located between the two control devices.
50. The remote controller according to Aspect 49, characterized in that, the middle function button is an emergency stop button configured to stop a movement of the remotely-controlled mobile platform.
51. The remote controller according to Aspect 50, characterized in that, the emergency stop button is located in a left side area of the front of the remote controller body.
52. The remote controller according to Aspect 49, characterized in that, the middle function button 116 is a custom function button.
53. The remote controller according to Aspect 52, characterized in that, the custom function key is located in a right side area of the front of the remote controller body.
54. The remote controller according to Aspect 48, characterized in that, the remote controller body is further provided with an upper function button above the two control devices.
55. The remote controller according to Aspect 54, characterized in that, the upper function button is a return button configured to return the remotely-controlled mobile platform to a preset location.
56. The remote controller according to Aspect 55, characterized in that, the return button is located in the left side area of the front of the remote controller body.
57. The remote controller according to Aspect 54, characterized in that, the upper function button is a power switch key configured to control power on and off of the remote controller.
58. The remote controller according to Aspect 57, characterized in that, the power switch key is located in a right side area of the front of the remote controller body.
59. The remote controller according to Aspect 48, characterized in that, the remote controller body is further provided with an upper-edge function button at an upper side of the remote controller body.
60. The remote controller according to Aspect 59, characterized in that, the upper-edge function button is a video button configured to control a camera of the remotely-controlled mobile platform to record video.
61. The remote controller according to Aspect 60, characterized in that, the video button is located in a left side area of the upper side of the remote controller body.
62. The remote controller according to Aspect 59, wherein the upper-edge function button is a photographing button configured to control a camera of the remotely-controlled mobile platform to shoot an image.
63. The remote controller according to Aspect 62, characterized in that, the photographing button is located in a right side area of the upper side of the remote controller body.
64. The remote controller according to Aspect 48, characterized in that, the remote controller body is further provided with a lock button configured to control the remote controller to enter a locked state.
65. The remote controller according to Aspect 64, characterized in that, the lock button is provided at a right side of the remote controller body.
66. The remote controller according to Aspect 64, characterized in that, the lock button is a push button, a touch button, a toggle switch, or a spin button.
67. The remote controller according to Aspect 47, characterized in that, the remote-controlled mobile platform is an unmanned aerial vehicle (UAV).
68. A manufacturing method of a remote controller, characterized in that, comprising:
   movably connecting a holding mechanism to a remote controller body via a connecting mechanism to allow the holding mechanism to move with respect to the remote controller body, such that the holding mechanism is either in an extended state for holding a mobile terminal or in a contracted state that is convenient for carrying the remote controller.
69. The manufacturing method according to Aspect 68, characterized in that, movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
   rotatably connecting the holding mechanism to the remote controller body via the connecting mechanism to allow the holding mechanism to rotate with respect to the remote controller body, such that the holding mechanism is either in the extended state for holding the mobile terminal or in the contracted state that is convenient for carrying the remote controller.
70. The manufacturing method according to Aspect 68, characterized in that, movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
   slidably connecting the holding mechanism to the remote controller body via the connecting mechanism to allow the holding mechanism to slide with respect to the remote controller body, such that the holding mechanism is either in the extended state for holding the mobile terminal or in the contracted state that is convenient for carrying the remote controller.
71. The manufacturing method according to Aspect 68, characterized in that, movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
   providing a receiving component at the remote controller body; and
   movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller and the holding mechanism is located at least partially inside the receiving component in the contracted state.
72. The manufacturing method according to Aspect 68, characterized in that, further comprising, after movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller:
   providing a handle at the holding mechanism, and connecting the connecting mechanism to the handle, such that the handle is located outside the remote controller body in the extended state for the user to hold.

## Claims

1. A remote controller, **characterized in that**, comprising:
a remote controller body including a control device configured to receive a remote-control command;
a holding mechanism configured to hold a mobile terminal; and
a connecting mechanism connected between the remote controller body and the holding mechanism;
wherein the holding mechanism is movably connected to the remote controller body via the connecting mechanism and the holding mechanism is configured to move with respect to the remote controller body, such that the holding mechanism is in an extended state for holding the mobile terminal or in a contracted state, and wherein the holding mechanism includes a first handle and a second handle connected to the connecting mechanism and located outside the remote controller body in the extended state, and wherein, in the extended state, the first handle and the second handle are spaced apart from each other to clamp the mobile terminal between the first handle and the second handle.

2. The remote controller according to claim 1, **characterized in that**, the holding mechanism is rotatably connected to the remote controller body via the connecting mechanism and an included angle of the holding mechanism with respect to the remote controller body is greater in the extended state than in the contracted state, or
**characterized in that**, the holding mechanism is slidably connected to the remote controller body via the connecting mechanism and a distance between the holding mechanism and the remote controller body is greater in the extended state than in the contracted state.

3. The remote controller according to claim 1, **characterized in that**:
the remote controller body includes a front and a plurality of sides connected to the front, the plurality of sides including a bottom side;
wherein, the control device is provided at the front of the remote controller body and the holding mechanism is configured to hold the mobile terminal at a position close to the bottom side.

4. The remote controller according to claim 1, **characterized in that**, the remote controller body is provided with a receiving component and the holding mechanism is provided at least partially inside the receiving component in the contracted state and protrudes from the receiving component in the extended state.

5. The remote controller according to claim 1, **characterized in that**, the connecting mechanism includes a rotating rod, an end of the rotating rod is rotatably connected to the remote controller body, and another end of the rotating rod is rotatably connected to the holding mechanism.

6. The remote controller according to claim 5, **characterized in that**, a first rotating shaft is provided at an end of the rotating rod, a second rotating shaft is provided at the other end of the rotating rod, the rotating rod is rotatably connected to the remote controller body via the first rotating shaft, and the rotating rod is rotatably connected to the holding mechanism via the second rotating shaft, preferably
wherein the first rotating shaft and/or the second rotating shaft are damping shafts.

7. The remote controller according to claim 1, **characterized in that**:
the first handle abuts against an edge of the remote controller body in the contracted state; or
the first handle is received at least partially inside the remote controller body in the contracted state.

8. The remote controller according to claim 1, **characterized in that**, a further one of the holding mechanism is provided, and the two holding mechanisms are spaced apart from each other in the extended state to form a holding space between the two holding mechanisms for holding the mobile terminal.

9. The remote controller according to claim 1, **characterized in that**, the holding mechanism includes a slot configured to hold the mobile terminal, preferably
wherein an anti-slip component is provided inside the slot and is configured to contact with the mobile terminal.

10. The remote controller according to any one of claims 1 to 9, **characterized in that**, the control device is provided at a front of the remote controller body and the remote controller body further includes a display screen and/or an operation button on the front of the remote controller body, preferably
wherein:
two control devices are provided and are spaced apart along a length direction of the front of the remote controller body, and the display screen and/or the operation button are provided between the two control devices.

11. The remote controller according to any one of claims 1 to 10, **characterized in that**, an antenna provided at a side of the remote controller body and rotatably connected to the remote controller body, and the antenna rotates relative to the remote controller body to cause the antenna to be extended or folded.

12. The remote controller according to any one of claims 1 to 11, **characterized in that**, the control device is located on a front of the remote controller body and configured to control a movement direction of a remotely-controlled mobile platform.

13. A manufacturing method of a remote controller, **characterized in that**, comprising:
movably connecting a holding mechanism to a remote controller body via a connecting mechanism to allow the holding mechanism to move with respect to the remote controller body, such that the holding mechanism is in an extended state for holding a mobile terminal or in a contracted state, wherein the holding mechanism includes a first handle and a second handle connected to the connecting mechanism and located outside the remote controller body in the extended state, and wherein, in the extended state, the first handle and the second handle are spaced apart from each other to clamp the mobile terminal between the first handle and the second handle.

14. The manufacturing method according to claim 13, **characterized in that**, movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
rotatably connecting the holding mechanism to the remote controller body via the connecting mechanism to allow the holding mechanism to rotate with respect to the remote controller body, such that the holding mechanism is either in the extended state for holding the mobile terminal or in the contracted state that is convenient for carrying the remote controller,
or
movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
slidably connecting the holding mechanism to the remote controller body via the connecting mechanism to allow the holding mechanism to slide with respect to the remote controller body, such that the holding mechanism is either in the extended state for holding the mobile terminal or in the contracted state that is convenient for carrying the remote controller.

15. The manufacturing method according to claim 13, **characterized in that**, movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller, includes:
providing a receiving component at the remote controller body; and
movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller and the holding mechanism is located at least partially inside the receiving component in the contracted state,
or
the method being **characterized in that** further comprising, after movably connecting the holding mechanism to the remote controller body via the connecting mechanism to allow the holding mechanism to move with respect to the remote controller body, such that the holding mechanism is either in the extended state for holding the mobile terminal or in the contracted state that is convenient for carrying the remote controller:
providing a handle at the holding mechanism, and connecting the connecting mechanism to the handle, such that the handle is located outside the remote controller body in the extended state for the user to hold.
